(19) **Europäisches Patentamt / European Patent Office / Office européen des brevets**

(11) **EP 1 824 632 B1**

(12) ## FASCICULE DE BREVET EUROPEEN

(45) Date de publication et mention de la délivrance du brevet:
**17.06.2009 Bulletin 2009/25**

(21) Numéro de dépôt: **05824049.0**

(22) Date de dépôt: **06.12.2005**

(51) Int Cl.:
**B23K 9/02** *(2006.01)*     **B23K 9/095** *(2006.01)*
**B23K 9/10** *(2006.01)*     **B23K 31/12** *(2006.01)*
**G06F 19/00** *(2006.01)*     **G06F 17/50** *(2006.01)*

(86) Numéro de dépôt international:
**PCT/FR2005/051036**

(87) Numéro de publication internationale:
**WO 2006/061536 (15.06.2006 Gazette 2006/24)**

(54) **PROCEDE POUR DETERMINER L'ANGLE D'OUVERTURE D'UN CHANFREIN DE SOUDAGE ETROIT UTILISANT UN MODELE MATHEMATIQUE IMPOSANT DES CHARGEMENTS THERMIQUES SUR LE BAIN DE SOUDAGE ET SUR LES PAROIS DUDIT CHANFREIN**

VERFAHREN ZUR BESTIMMUNG DES EINGESCHLOSSENEN WINKELS EINER SCHMALEN SCHWEISSFASE UNTER VERWENDUNG EINES MATHEMATISCHEN MODELLS, DAS DAS SCHWEISSBAD UND DIE WÄNDE DER FASE THERMISCH BELASTET

METHOD OF DETERMINING THE INCLUDED ANGLE OF A NARROW WELDING BEVEL USING A MATHEMATICAL MODEL THAT IMPOSES THERMAL LOADING ON THE WELD POOL AND ON THE WALLS OF THE BEVEL

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.12.2004 FR 0452898**

(43) Date de publication de la demande:
**29.08.2007 Bulletin 2007/35**

(73) Titulaire: **COMMISSARIAT A L'ENERGIE ATOMIQUE**
**75015 Paris (FR)**

(72) Inventeurs:
• **GABRIEL, Franck**
**F-91190 Gif Sur Yvette (FR)**
• **FONTES, André**
**F-75014 Paris (FR)**

(74) Mandataire: **Poulin, Gérard et al**
**Brevatome**
**3, rue du Docteur Lancereaux**
**75008 Paris (FR)**

(56) Documents cités:
**US-A- 5 760 365        US-B1- 6 398 102**

• **ANONYMOUS: "Engineering Simulation Solution for Heat Treatment, Welding and Welding Assambly" INTERNET ARTICLE, [Online] 2003, XP002338183 Extrait de l'Internet: URL: WWW.ESI-GROUP.COM>**
• **PATENT ABSTRACTS OF JAPAN vol. 015, no. 155 (M-1104), 18 avril 1991 (1991-04-18) -& JP 03 027875 A (KAWASAKI STEEL CORP), 6 février 1991 (1991-02-06)**
• **JEONG S K ET AL: "AN ANALYTICAL SOLUTION TO PREDICT THE TRANSIENT TEMPERATURE DISTRIBUTION IN FILLET ARC WELDS" WELDING JOURNAL, AMERICAN WELDING SOCIETY. MIAMI, US, vol. 76, no. 6, juin 1997 (1997-06), pages 223S-232S, XP000691472 ISSN: 0043-2296**
• **KUMAR S ET AL: "THREE-DIMENSIONAL FINITE ELEMENT MODELING OF GAS METAL-ARC WELDING" METALLURGICAL AND MATERIALS TRANSACTIONS B: PROCESS METALLURGY & MATERIALS PROCESSING SCIENCE, THE MATERIALS INFORMATION SOCIETY, US, vol. 25B, no. 3, 1 juin 1994 (1994-06-01), pages 435-441, XP000451905 ISSN: 1073-5623**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 1 824 632 B1**

**Description**

L'invention concerne un procédé d'optimisation de l'angle d'ouverture d'un chanfrein étroit pour la réalisation d'un assemblage par soudage entre une première et seconde pièces, une torche de soudage fournissant la chaleur et la matière permettant de remplir le chanfrein et provoquant l'apparition d'un bain de soudage qui réalise l'assemblage, le procédé utilisant un modèle mathématique représentant l'apport de chaleur de la torche de soudage (voir, par exemple, www.ESI-Group "Engineering Simulation Solution for Heat Treatment and Welding Assembly).

Il est connu de réaliser un assemblage de pièces soudées, par exemple des tubes ou des plaques, comportant un chanfrein étroit ayant des parois resserrées, chacune des faces de ce chanfrein faisant un angle sensiblement égal à 3° avec le plan de symétrie médian de l'assemblage des pièces. A titre d'exemple, le document « Mise en oeuvre du procédé de soudage TIG orbital avec chanfrein étroit » (Souder, mars 1993, n°2) décrit un procédé TIG orbital à chanfrein étroit (TOCE) développé en vue d'assembler par soudage les tuyauteries primaires des chaudières PWR. Dans un soudage à chanfrein étroit, le rapport de la profondeur du chanfrein à sa largeur, rapport appelé facteur de forme, est de l'ordre de 10. Ce type de chanfrein s'oppose aux chanfreins en V larges traditionnels dans lesquels le facteur de forme est typiquement compris entre 1 et 3.

Les avantages du soudage en chanfrein étroit sont importants. Comme le chanfrein est étroit, son volume est nettement inférieur à celui d'un chanfrein large. En conséquence, la quantité de métal à déposer diminue dans les mêmes proportions. Il en résulte à la fois une économie de métal d'apport, d'énergie et un gain de temps pour la dépose du métal.

Dans un chanfrein en V ouvert, la largeur du chanfrein varie de manière importante du début à la fin de la soudure. En conséquence, le nombre de passes à prévoir pour remplir ce chanfrein augmente du talon de soudure à la fin de la soudure. Au contraire, dans un chanfrein étroit, la largeur du chanfrein reste sensiblement constante de telle sorte que le nombre de passes, par exemple une ou deux, reste lui aussi constant. Il en résulte une amélioration de qualité métallurgique de la soudure.

Enfin, la fiabilité est améliorée parce que la plupart des paramètres opératoires restent identiques du début à la fin du soudage, à l'exception des passes de racine et de finition.

Toutefois, une difficulté d'exécution d'une soudure en chanfrein étroit provient du resserrement du chanfrein en cours de soudage. En effet, au cours du remplissage, sous l'effet de l'apport de chaleur du procédé, l'assemblage est sujet au développement de contraintes et de distorsions. Ces distorsions cumulées à chaque passe se traduisent par un resserrement du chanfrein qui dépend des pièces à assembler (dimensions, matériau, etc), du procédé et de ses conditions de mise en oeuvre. Il est par conséquent nécessaire de compenser ce resserrement en prévoyant un angle initial d'ouverture entre les deux parois opposées du chanfrein de manière à garantir une largeur en fond de chanfrein à peu près constante à chaque couche du début à la fin du procédé.

Afin de prédire correctement les effets mécaniques liés à une opération de soudage, il est nécessaire de connaître l'apport de chaleur pour un procédé de soudage et des conditions opératoires données.

Or, l'apport de chaleur est le résultat complexe d'une transformation partielle de l'énergie fournie par la tête de soudage en énergie thermique dans l'assemblage. Les mouvements de convection induits par le gradient thermique (poussée d'Archimède et force thermo-capillaire) par les forces Lorentz et de poussée d'arc (procédé arc), par la pression de recul (procédé à haute densité d'énergie) redistribuent dans l'assemblage l'énergie provenant de la tête de soudage. Ainsi, compte tenu du fort couplage existant entre les forces électromagnétiques, les changements d'états, les écoulements de fluides (gazeux et liquides) de nature laminaire et/ou turbulent, la modélisation des différents phénomènes physiques intervenant dans le procédé de soudage est très complexe. Il n'existe pas actuellement de code de calcul métier capable de prendre en compte ces différents couplages et permettant d'aboutir directement au calcul de la distorsion des pièces assemblées.

La valeur de l'angle optimal peut être obtenue en pratique en réalisant une campagne d'essais sur des maquettes de qualification en faisant varier l'angle du chanfrein pour des conditions opératoires sélectionnées au regard de la qualité de la soudure et de la productivité souhaitée. Ce processus est long, coûteux, et valable exclusivement pour la configuration considérée.

C'est pourquoi, afin de réduire les coûts, on a développé des simulations de soudage utilisant des logiciels de calcul faisant appel à la méthode des éléments finis. On citera par exemple le logiciel métier « SYSWELD » de la société ESI.

Les procédés de simulation du soudage actuellement connus concernent principalement des modèles de comportement métallurgiques et mécaniques.

Pour utiliser ce modèle de calcul, il est nécessaire de disposer d'un modèle prédictif représentant l'apport de chaleur du procédé en chanfrein étroit dont les coefficients sont dépendant des paramètres opératoires afin d'utiliser ce chargement dans les calculs thermo-métallurgiques et mécaniques simulant le resserrement du chanfrein pour les conditions opératoires et les géométries du chanfrein à analyser.

Il existe des approches bi-dimentionnelles (2D) simulant une coupe transversale du chanfrein. Ces approches ne permettent pas de prendre en compte les transferts thermiques dans la direction de progression de la torche de soudage. Elles sont peu pertinentes pour les calculs de distorsions.

En vue de calculer le champ de température d'un assemblage soudé, une approche couramment utilisée en modélisation tridimentionnelle introduit le concept de source volumique apparente, en postulant a priori une fonction mathématique pour la distribution dans le bain de soudage de la puissance thermique provenant du procédé (distribution gaussienne volumique dans un double ellipsoïde ou hyperboloïde, distribution surfacique). Le champ de température s'obtient alors en résolvant un problème de conduction non linéaire dans les pièces à assembler.

Le document [1] décrit un modèle thermique dans le cas d'un soudage d'un tube en chanfrein classique en V ouvert représentant l'apport thermique de la torche sous la forme d'un flux uniforme sur demi-disque en fond de chanfrein. Les calculs utilisent une modélisation aux éléments finis en formulation lagrangienne, c'est-à-dire liée au référentiel de l'observateur.

Dans le cas du soudage d'un tube en chanfrein étroit, un modèle thermique représentant l'apport de chaleur du procédé de soudage sous la forme d'une source volumique hémisphérique à distribution gaussienne dans un bain à laquelle est ajoutée une source à distribution gaussienne à la surface du bain est décrit dans le document [2]. Les calculs utilisent une modélisation aux éléments finis en formulation lagrangienne.

Dans le cas d'une plaque soudée en chanfrein étroit, un modèle thermique représentant le procédé sous la forme d'une source ponctuelle à la surface du bain est décrit dans le document [3]. Les calculs utilisent une solution analytique en formulation eulérienne, c'est-à-dire liée au référentiel de la tête de soudage.

Ces approches connues ramènent l'interaction physique entre la tête de soudage et l'assemblage à une redistribution de l'énergie uniquement dans le bain fondu.

Elles ne peuvent pas répondre au problème de la représentation de l'apport de chaleur dans un chanfrein étroit. En effet, dans un tel soudage, les phénomènes physiques mis en jeu lors de la transformation de l'énergie électrique en énergie thermique se trouvent confinés dans un espace élancé et étroit. Une partie non négligeable de l'énergie de la tête de soudage est transmise aux parois solides du chanfrein.

Plus encore, pour optimiser le calcul du chanfrein étroit, les conditions aux limites thermiques doivent être directement reliées aux paramètres opératoires de soudage car le resserrement du chanfrein est dû au chargement thermique qui dépend des conditions opératoires. En effet, si l'on veut paramétrer le calcul du resserrement du chanfrein en fonction des paramètres opératoires de soudage, il suffit de paramétrer le chargement thermique, source des distorsions et des contraintes résiduelles dans l'assemblage. On dispose ainsi d'un calcul thermique métallurgique et mécanique dont les variables sont les paramètres opératoires de soudage.

L'invention a précisément pour objet un procédé d'optimisation de l'angle d'ouverture d'un chanfrein qui propose un modèle mathématique de l'apport de chaleur de la torche de soudage qui prend en compte la répartition de l'énergie dans chanfrein étroit. Le procédé d'optimisation conforme à l'invention est défini dans la revendication 1.

Conformément à l'invention, le modèle mathématique de l'apport de chaleur considère une source volumique pouvant se dégénérer en une source surfacique qui est injectée dans le bain de soudage, source à laquelle le modèle mathématique superpose un chargement thermique qui prend en compte les effets de confinement du chanfrein.

Dans une variante, le modèle mathématique définit une distribution de flux de chaleur sur la paroi du chanfrein au voisinage de la tête de soudage.

Dans une autre variante, le modèle mathématique identifie le flux thermique échangé à la paroi du chanfrein avec une loi d'échange du type h(T)x[T-Ti($\alpha$)] où h(T) est un coefficient d'échange thermique fonction de la température T de paroi du chanfrein, Ti une température équivalente du milieu (atmosphère environnante dans le chanfrein) *f* dépendant de la position angulaire circonférentielle de la torche de soudage dans le chanfrein.

Ainsi, selon que la température de paroi est supérieure ou inférieure à la température du milieu, le flux échangé est un apport ou une déperdition de chaleur.

La représentation d'apport d'énergie tenant compte du confinement du chanfrein est indépendante de son angle d'ouverture.

Avantageusement, l'invention concerne également un procédé d'optimisation dans lequel le modèle mathématique de l'apport thermique a des coefficients qui sont des fonctions des paramètres opératoires du soudage.

Dans cette étape connue du procédé, on peut expliciter les coefficients du modèle d'apport de chaleur en fonction des paramètres opératoires de soudage (surface de réponse). La surface de réponse choisie a priori définit un nombre d'essais de soudage à réaliser sur un chanfrein figé mais compris entre 1° et 5°. On applique par exemple la méthodologie classique des plans d'expériences. Les plans d'expériences sont des méthodes couramment utilisées dans le milieu industriel. Une référence possible est celle des techniques de l'ingénieur « Modélisation par les plans d'expériences, Jacques Goupy, R 275, techniques de l'ingénieur ».

Selon l'invention :

- le modèle mathématique de l'apport thermique impose un chargement thermique sur le bain de soudage et un chargement thermique sur les parois du chanfrein ;

- on réalise des opérations de soudage sur une série de maquettes réelles des pièces à souder pour une plage de conditions opératoires, l'angle du chanfrein restant fixe, chaque maquette étant équipée d'instruments de mesure des températures et des dimensions du bain pour en déduire des valeurs de l'apport de chaleur pour chaque essai ;
- on détermine les coefficients du modèle pour chaque opération de soudage réelle (surface de réponse) ;
- on réalise un plan d'expériences numériques (simulations numériques et thermomécaniques de maquettes de qualification virtuelles) pour une plage d'angles d'ouverture de chanfrein et pour la plage de conditions opératoires définie précédemment, et utilisant, pour simuler l'apport de chaleur pour chaque maquette de qualification, les coefficients du modèle d'apport de chaleur déterminés en utilisant la surface de réponse ;
- au vu des résultats des simulations numériques, on sélectionne les paramètres opératoires et l'angle de chanfrein à retenir pour l'opération de soudage sur les pièces réelles.

Avantageusement :

- on définit la configuration de soudage pour laquelle le dessin du chanfrein est à optimiser ;
- on sélectionne la gamme de paramètres opératoires ;
- on choisit une correspondance entre les coefficients du modèle représentant l'apport de chaleur et les paramètres opératoires de soudage, cette correspondance définissant un nombre d'inconnues à identifier ;
- on définit un plan d'expériences pour identifier les inconnues au moyen d'un nombre optimal d'essais de soudage instrumentés ;
- on analyse la sensibilité de la réponse thermique simulée aux différents coefficients du modèle représentant l'apport de chaleur et on définit l'instrumentation optimale pour identifier les coefficients du modèle représentant l'apport de chaleur ;
- on réalise des essais de soudage instrumentés ;
- on identifie les coefficients du modèle représentant l'apport de chaleur pour chaque essai instrumenté ;
- on identifie les inconnues de la correspondance entre les coefficients du modèle représentant l'apport de chaleur et les paramètres opératoires de soudage ;
- on réalise un essai de validation de la correspondance entre les coefficients du modèle représentant l'apport de chaleur et les paramètres opératoires de soudage ;
- on définit un plan d'expériences numériques destinées à relier le resserrement intercouche du chanfrein à l'angle initial du chanfrein et aux conditions opératoires ;
- on sélectionne l'angle du chanfrein et les conditions opératoires qui produisent une largeur de cordon uniforme sur la hauteur du joint soudé.

D'autres caractéristiques et avantages de l'invention apparaîtront encore à la lecture de la description qui suit d'exemples de réalisation donnés à titre illustratif en référence aux figures annexées. Sur ces figures :

- la figure 1 est une vue en coupe illustrant un procédé de soudure en chanfrein étroit ;
- les figures 2 et 3 illustrent le resserrement d'un chanfrein étroit ;
- la figure 4 est un schéma de flux uniforme sur un demi-disque en fond de chanfrein en V ouvert ;
- la figure 5 est un exemple de la modélisation de l'apport de chaleur en chanfrein étroit conforme à la présente invention ;
- la figure 6 est un schéma qui précise l'orientation des grandeurs L, lar et péné ;
- la figure 7 est un schéma de principe d'une source de chaleur représentative en chanfrein étroit combinant une source volumique et une source surfacique rectangulaire.

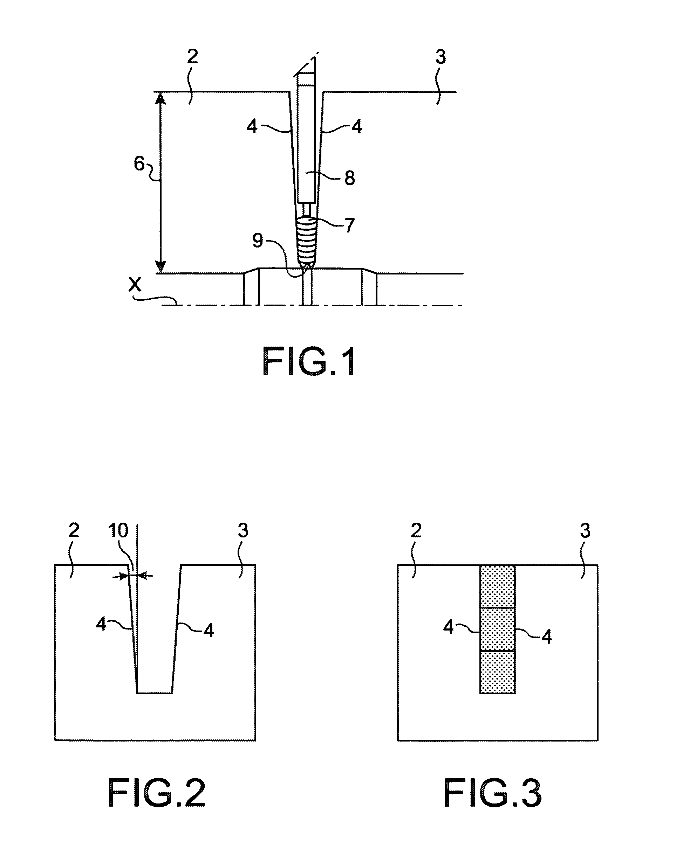

Sur la figure 1, les pièces à assembler sont constituées par un premier tube 2 et un deuxième tube 3 d'axe X. Les tubes 2 et 3 sont disposés bout à bout. Dans l'exemple, l'épaisseur de paroi des tubes 2 et 3 est comprise entre 70 et 85 mm. Chaque tube comporte un chanfrein 4 dont l'angle d'ouverture par rapport à un plan perpendiculaire l'axe X est typiquement de 2° à 3°.

La largeur du chanfrein est typiquement comprise entre 7 et 11 mm.

Le chanfrein ne s'étend pas sur toute l'épaisseur des tubes, mais laisse subsister un talon de matière 9 à la partie inférieure du chanfrein. Une passe de pénétration est réalisée en TIG automatique puis on procède au remplissage du chanfrein en réalisant une ou deux passes par couche au moyen d'une torche 8 qui provoque l'apparition d'un bain de métal liquide 7.

Les figures 2 et 3 illustrent le resserrement du chanfrein. Sur la figure 2 l'angle 10 d'ouverture du chanfrein est de 2 à 3°. Après exécution de la soudure, comme représenté sur la figure 3, les deux parois du chanfrein 4 sont parallèles.

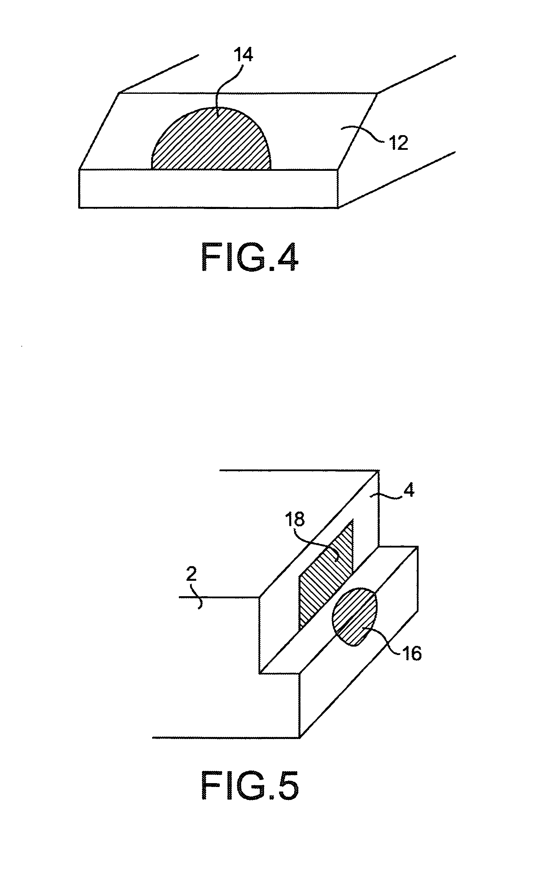

La figure 4 illustre un modèle mathématique représentant l'apport de chaleur d'une torche de soudage dans un procédé de l'art antérieur. Dans ce procédé, le chanfrein est un chanfrein ouvert présentant un angle important, par exemple 20° à 30°. Le modèle mathématique représente la source de chaleur sous la forme d'un demi-disque 14 en fond de chanfrein 12. Le modèle mathématique considère que la source de chaleur surfacique 14, ainsi que la source symétrique (non représentée) située sur l'autre chanfrein, est distribuée uniquement dans le bain fondu. Une telle approche ne répond pas au problème de la représentation de l'apport de chaleur dans un chanfrein étroit tel que représenté sur la figure 1 dans lequel l'énergie thermique est confinée dans un espace étroit.

On a représenté sur la figure 5 une représentation schématique d'un exemple de modèle mathématique d'une source de chaleur en chanfrein étroit conforme à l'invention. Dans ce modèle, l'apport de chaleur considère une source volumique 16 pouvant se dégénérer en une source surfacique. La source 16 est injectée dans le bain de soudage. En d'autres termes, le modèle mathématique considère que l'énergie thermique émise par la source 16 est entièrement absorbée par le bain de métal liquide. A la source volumique 16, le modèle mathématique superpose un chargement thermique qui prend en compte les effets de confinement du chanfrein. Dans l'exemple de la figure 5, ce chargement thermique 18 est une source surfacique rectangulaire. La source 18 est injectée entièrement sur la paroi du chanfrein 4. Evidemment, une source symétrique 18 est injectée dans la paroi du chanfrein opposé.

Selon l'invention, la simulation est effectuée dans un repère lié à la torche en supposant que la matière (les tubes à souder) défile et non que la torche se déplace autour du tube. Cela suppose un régime thermique établi. Ce type d'approche permet un gain de temps de calcul d'au moins un facteur 10.

## Exemples :

On donne ci-dessous un modèle de source de chaleur volumique en soudage, de type Goldak répartissant l'apport d'énergie en avant et en arrière de la torche.

<u>A l'avant de la torche</u>

$$P_{ther}(X_s, Y_s, Z_s, t) = f_f \frac{6\sqrt{3Q}}{L_1 lar.péné\pi^{3/2}} e^{-3(x_s/l_1)^2} e^{-3(y_s/L_1)^2} e^{-3(z_s/péné)^2} \text{ Equation 1}$$

<u>A l'arrière de la torche</u>

$$P_{ther}(X_s, Y_s, Z_s, t) = f_r \frac{6\sqrt{3Q}}{L_2 lar.péné\pi^{3/2}} e^{-3(x_s/l_1)^2} e^{-3(y_s/L_2)^2} e^{-3(z_s/péné)^2} \text{ Equation 2}$$

Où

$L_1$=longueur suivant X de la demi ellipsoïde à l'avant de la torche.
$L_2$=longueur suivant X de la demi ellipsoïde à l'arrière de la torche.
Lon=$L_1$+$L_2$.
Lar=longueur suivant Y (identique pour les deux demi ellipsoïde).
Péné=longueur suivant Z (identique pour les deux ellipsoïde).
$f_f$=pourcentage de l'énergie totale appliqué à l'avant de la torche.
$f_r$=pourcentage de l'énergie totale appliqué à l'arrière de la torche.
Q=énergie totale.

On définit aussi le rapport entre $L_2$ et $L_1$ : rap=$L_2$/$L_1$.

Le bilan d'énergie impose que : $f_f$+$f_r$=2 tandis que la continuité entre l'avant et l'arrière de la torche assure que : $L_1(2-f_f)=L_2 f_f$

Il y a cinq paramètres indépendants : lar, lon, péné, rap et Q.

La source Goldak est souvent utilisée car elle permet de séparer les transferts d'énergie en avant et en arrière de la torche, aussi bien en ce qui concerne l'énergie injectée que la dimension (suivant Y) des zones dans laquelle cette énergie est injectée. Goldak a montré que l'utilisation de cette source était satisfaisante dans le cas où considère un apport de matière.

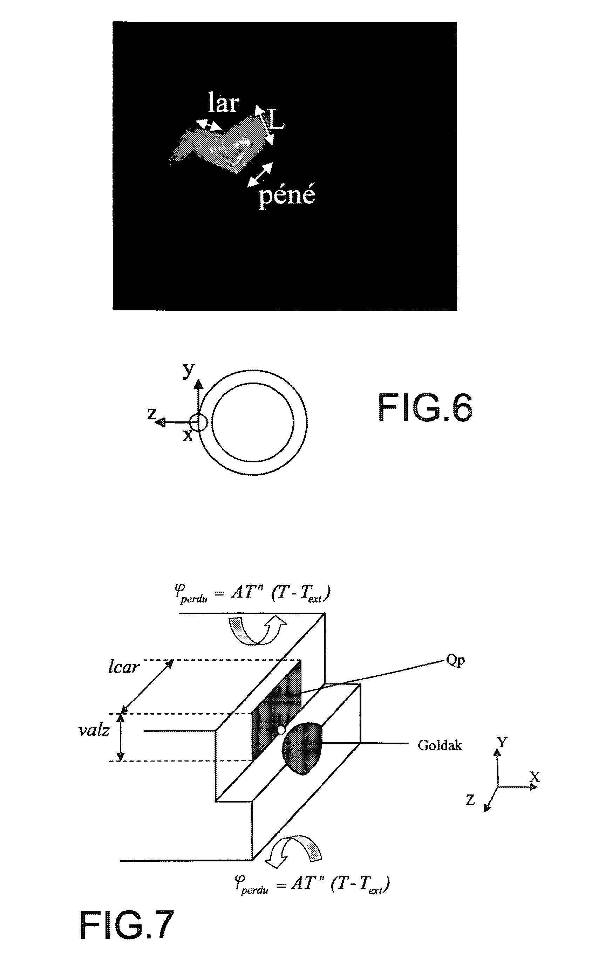

On a représenté sur la figure 7 un schéma de principe d'une source de chaleur représentative du soudage en chanfrein étroit, combinant une source volumique (ici de type Goldak) localisée dans le cordon et une source surfacique (flux constant rectangulaire) appliqué en paroi de chanfrein.

Dans un exemple de simulation numérique de l'opération de soudage d'un tube avec un joint à chanfrein étroit utilisant cette source on a :

lar=5.10$^{-3}$ ; Lon=12.10$^{-3}$ ; péné=5.10$^{-3}$ ; rap=2

Q=1000W ; A=1,25.10$^{-3}$ ; n=1,61 ; lcar=15.10$^{-3}$ ; pos-ref=2,2 ; Val z=10.10$^{-3}$ ; Qp=200W

Le flux perdu par échanges de type convectif et par rayonnement aux surfaces extérieure et intérieure du tube, s'écrit globalement : $\varphi_{perdu}=AT^n (T-T_{ext})$

A et n étant des paramètres à optimiser.

$Q_p$ est le flux constant appliqué sur la zone pariétale rectangulaire.

Valz et lcar sont respectivement la hauteur selon Y et la longueur selon Z de la source pariétale rectangulaire.

post_ref représente la distance projetée selon Z entre la position du centre de la zone pariétale rectangulaire et la position de la torche de soudage.

## Références

[1] T. Yokogawa, T. Ohji, Y. Hirata, F. Miyasaka, T. Masutani-Mathematical modelling of circumferential GTA welding of pipes with single V grove- Welding International, 1999 13 (5) 360-367.

[2] M.Li, D.G. Atteridge, L. L Meekisho, S.L. WEST-A 3 D finite element analysis of temperature and stress fields in girth welded 304L stainless steel pipe-Trends in Welding research, proceedings of the 4th international conference, 5-8 june, 1995, Gatlinburg, Tennessee.

[3] J. Senk, A. Martinak-Mathematical simulation of thermal cycles in the heat affected zone in narrow gap welding- Welding International, 1992 6 (8) pp 654-660.

## Revendications

1. Procédé d'optimisation de l'angle d'ouverture d'un chanfrein de soudage étroit pour la réalisation d'un assemblage par soudage entre une première et une seconde pièces, une torche de soudage fournissant la chaleur et la matière permettant de remplir le chamfrein et provoquant l'apparition d'un bain de soudage qui réalise l'assemblage, le procédé utilisant un modèle mathématique représentent l'apport de chaleur de la torche de soudage (8), **caractérisé en ce que** le modèle mathématique impose un chargement thermique (16) sur le bain de soudage et un chargement thermique (18) sur les parois (4) du chanfrein et **en ce que** le modèle mathématique de l'apport de chaleur considère une source volumique (16) qui est injectée dans le bain de soudage (7), source à laquelle il superpose un chargement thermique (18) qui prend en compte les effets de confinement du chanfrein.

2. Procédé selon la revendication 1, **caractérisé en ce que** le modèle mathématique définit une distribution de flux de chaleur (18) sur la paroi (4) du chanfrein au voisinage de la tête de soudage (8).

3. Procédé selon la revendication 1, **caractérisé en ce que** le modèle mathématique identifie le flux thermique échangé à la paroi (4) du chanfrein avec une loi d'échange thermique du type $h(T)x[T-Ti(\alpha)]$ où $h(T)$ est un coefficient d'échange thermique en fonction de la température, Ti une température équivalente du milieu dépendante de la position angulaire circonférentielle $\alpha$ de la torche (8) dans le chanfrein.

4. Procédé selon l'une des revendications 1 à 3 **caractérisé en ce que** le modèle mathématique a des coefficients qui sont des fonctions des paramètres opératoires du soudage, que l'on réalise des opérations de soudage sur une série de maquettes réelles des pièces à souder pour une plage de conditions opératoires, l'angle du chanfrein restant fixe, chaque maquette étant équipée d'instruments de mesure des températures et des dimensions du bain pour en déduire des valeurs de l'apport de chaleur pour chaque essai ;

   - que l'on détermine les coefficients du modèle pour chaque opération de soudage réelle ;
   - que l'on réalise un plan d'expériences numériques (simulations numériques et thermomécaniques de maquettes de qualification virtuelles) pour une plage d'angles d'ouverture de chanfrein et pour la plage de conditions opératoires définie précédemment, et utilisant, pour simuler l'apport de chaleur pour chaque maquette de qualification, les coefficients du modèle d'apport de chaleur déterminés en utilisant la surface de réponse ;
   - qu'au vu des résultats des simulations numériques, on sélectionne les paramètres opératoires et l'angle de chanfrein à retenir pour l'opération de soudage sur les pièces réelles.

**5.** Procédé selon la revendication 4,
**caractérisé en ce que** :

- on définit la configuration de soudage pour laquelle le dessin du chanfrein est à optimiser ;
- on sélectionne la gamme de paramètres opératoires ;
- on choisit une correspondance entre les coefficients du modèle représentant l'apport de chaleur et les paramètres opératoires de soudage, cette correspondance définissant un nombre d'inconnues à identifier ;
- on définit un plan d'expériences pour identifier les inconnues au moyen d'un nombre optimal d'essais de soudage instrumentés ;
- on analyse la sensibilité de la réponse thermique simulée aux différents coefficients du modèle représentant l'apport de chaleur et on définit l'instrumentation optimale pour identifier les coefficients du modèle représentant l'apport de chaleur ;
- on réalise des essais de soudage instrumentés ;
- on identifie les coefficients du modèle représentant l'apport de chaleur pour chaque essai instrumenté ;
- on identifie les inconnues de la correspondance entre les coefficients du modèle représentant l'apport de chaleur et les paramètres opératoires de soudage ;
- on réalise un essai de validation de la correspondance entre les coefficients du modèle représentant l'apport de chaleur et les paramètres opératoires de soudage ;
- on définit un plan d'expériences numériques destinées à relier le resserrement intercouche du chanfrein à l'angle initial du chanfrein et aux conditions opératoires ;
- on sélectionne l'angle du chanfrein et les conditions opératoires qui produisent une largeur de cordon uniforme sur la hauteur du joint soudé.

**Claims**

**1.** A method for optimizing the included angle of a narrow welding chamfer for producing an assembly by welding between a first and second parts, a welding torch providing the heat and material allowing the chamfer to be filled and causing the occurrence of a welding bath which achieves the assembling, the method using a mathematical model representing the supply of heat from the welding torch (8), **characterized in that** the mathematical model imposes a heat load (16) on the welding bath and a heat load (18) on the walls (4) of the chamfer and **in that** the mathematical model of the supply of heat considers a volume source (16) which is injected into the welding bath (7), a source to which it superposes a heat load (18), which takes into account the confinement effects of the chamfer.

**2.** The method according to claim 1, **characterized in that** the mathematical model defines a distribution of heat flow (18) on the wall (4) of the chamfer in the vicinity of the welding head (8).

**3.** The method according to claim 1, **characterized in that** the mathematical model identifies the heat flow exchanged at the wall (4) of the chamfer with a heat exchange law of the $h(T) \times [T-Ti(\alpha)]$ type wherein $h(T)$ is a heat exchange coefficient depending on temperature, $Ti$ is an equivalent temperature of the medium depending on the circumferential angular position $\alpha$ of the torch (8) in the chamfer.

**4.** The method according to any of claims 1 to 3, **characterized in that** the mathematical model has coefficients which are functions of the operating parameters of the welding, **in that** welding operations are performed on a series of real models of parts to be welded for a range of operating conditions, the angle of the chamfer remaining fixed, each model being equipped with instruments for measuring temperatures and dimensions of the bath in order to infer values for the supply of heat for each test;

- **in that** the coefficients of the model are determined for each real welding operation;
- **in that** a schedule of digital experiments (digital and thermomechanical simulations of virtual qualification models) is carried out for a range of included chamfer angles and for the range of operating conditions defined earlier, and using, for simulating the supply of heat for each qualification model, the heat supply model coefficients determined by using the response surface;
- **in that** considering the results of digital simulations, the operating parameters and the chamfer angle to be retained for the welding operation on real parts are selected.

**5.** The method according to claim 4,
**characterized in that:**

- the welding configuration for which the outline of the chamfer is to be optimized is defined;
- the range of operating parameters is selected;
- a correspondence between the coefficients of the model representing the supply of heat and the operating welding parameters is selected, this correspondence defining a number of unknowns to be identified;
- a schedule of experiments is defined in order to identify the unknowns by means of an optimum number of instrumented welding tests;
- the sensitivity of the simulated heat response to different coefficients of the model representing the supply of heat is analyzed and the optimum instrumentation is defined in order to identify the coefficients of the model representing the supply of heat;
- instrumented welding tests are performed;
- the coefficients of the model representing the supply of heat for each instrument test are identified;
- the unknowns of the correspondence between the coefficients of the model representing the supply of heat and the operating welding parameters are identified;
- a test for validating the correspondence between the coefficients of the model representing the supply of heat and the operating welding parameters is performed;
- a schedule of digital experiments intended to link the interlayer narrowing of the chamfer to the initial angle of the chamfer and to the operating conditions;
- the angle of the chamfer and the operating conditions which produce a uniform bead length over the height of the welded joint are selected.

## Patentansprüche

1. Verfahren zur Optimierung des Fasenwinkels einer schmalen Schweißnaht zur Herstellung einer Schweißverbindung zwischen einem ersten und einem zweiten Teil, wobei ein Schweißbrenner die Wärme und das Material zum Füllen der Schweißnaht liefert und ein Schweißbad zur Realisierung des Zusammenbaus erzeugt und das Verfahren dabei ein die Wärmezufuhr des Schweißbrenners (8) darstellendes mathematisches Modell benutzt, **dadurch gekennzeichnet, dass** das mathematische Modell eine thermische Belastung (16) des Schweißbads und eine thermische Belastung (18) der Schweißnahtwände (4) vorschreibt, und **dadurch**, dass das mathematische Modell der Wärmezufuhr eine in das Schweißbad (7) injizierte Volumenquelle (16) vorsieht, wobei es dieser Quelle eine thermische Belastung (18) überlagert, welche den Einschließungseffekten der Schweißnaht Rechnung trägt.

2. Verfahren nach Anspruch 1, **dadurch gekennzeichnet, dass** das mathematische Modell eine Wärmeflussverteilung (18) über die Wand (4) der Naht in der Umgebung des Schweißkopf (8) definiert.

3. Verfahren nach Anspruch 1, **dadurch gekennzeichnet, dass** das mathematische Modell den Fluss der mit der Wand (4) der Schweißnaht ausgetauschten Wärme mit einem Wärmeaustauschgesetz des Typs $h(T) \times [T - T_i(\alpha)]$ identifiziert, wo $h(T)$ ein Wärmeaustauschkoeffizient in Abhängigkeit von der Temperatur ist und $T_i$ eine von der Umfangswinkelposition $\alpha$ des Schweißbrenners (8) in der Schweißnaht abhängige äquivalente Temperatur ist.

4. Verfahren nach einem der Ansprüche 1 bis 3, **dadurch gekennzeichnet, dass** das mathematische Modell Koeffizienten hat, die Funktionen der Betriebsparameter der Schweißung sind,

- dass man Schweißoperationen bei einer Serie von realen Modellen der zu verschweißenden Teile über einen Bereich von Betriebsbedingungen durchführt, bei konstantem Schweißnahtwinkel, wobei jedes Modell mit Instrumenten zum Messen der Temperaturen und der Dimensionen des Bads ausgerüstet ist, um davon Wärmezufuhrwerte für jeden Versuch abzuleiten;
- dass man die Koeffizienten des Modells für jede reale Schweißoperation bestimmt;
- dass man eine numerische Erfahrungsebene (numerische und thermomechanische Simulationen virtueller Qualifikationsmodelle) für einen Schweißnahtwinkelbereich und für den Bereich vorhergehend definierter Betriebsbedingungen erstellt, und man, um die Wärmezufuhr für jedes Qualifikationsmodell zu simulieren, die bestimmten Koeffizienten des Wärmezufuhrmodells benutzt, indem man die Antwortoberfläche benutzt;
- dass man für die Schweißoperation bei den realen Teilen die Betriebsparameter und den Nahtwinkel angesichts der Resultate der numerischen Simulationen auswählt.

5. Verfahren nach Anspruch 4, **dadurch gekennzeichnet, dass:**

- man die Konfiguration der Schweißung definiert, für die das Bild der Schweißnaht zu optimieren ist;

- man den Betriebsparameterbereich auswählt;

- man eine Übereinstimmung bzw. Entsprechung zwischen den Koeffizienten des die Wärmezufuhr darstellenden Models und den Schweißbetriebsparametern wählt, wobei diese Entsprechung eine Anzahl zu identifizierender Unbekannter definiert;

- man eine Erfahrungsebene definiert, um die Unbekannten mit Hilfe einer optimalen Anzahl instrumentierter Schweißversuche zu identifizieren;

- man die Empfindlichkeit der simulierten thermischen Reaktion mit den verschiedenen Koeffizienten des Modells analysiert und die optimale Instrumentierung definiert, um die Koeffizienten des die Wärmezufuhr darstellenden Modells zu identifizieren;

- man instrumentierte Schweißversuche durchfährt;

- man für jeden instrumentierten Versuch die Koeffizienten des die Wärmezufuhr darstellenden Modells identifiziert;

- man die Unbekannten der Entsprechung zwischen den Koeffizienten des die Wärmezufuhr darstellenden Modells und den Schweißbetriebsparametern identifiziert;

- man einen Versuch zur Validation der Entsprechung zwischen den Koeffizienten des die Wärmezufuhr darstellenden Modells und den Schweißbetriebsparametern durchführt;

- man eine Ebene numerischer Erfahrungen definiert, dazu bestimmt, die Verengung zwischen Schichten der Naht mit dem Anfangswinkel der Naht und mit den Betriebsbedingungen zu verknüpfen;

- man den Winkel der Naht und die Betriebsbedingungen wählt, die eine gleichmäßige Schweißnahtbreite über die Höhe der Schweißverbindung gewährleisten.

**FIG.1**

**FIG.2**

**FIG.3**

14

12

## FIG.4

18

4

2

16

## FIG.5

lar  L

péné

**FIG.6**

$$\varphi_{perdu} = AT^n \ (T - T_{ext})$$

lcar

valz

Qp

Goldak

$$\varphi_{perdu} = AT^n \ (T - T_{ext})$$

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Mise en oeuvre du procédé de soudage TIG orbital avec chanfrein étroit,* Mars 1993
- **T. Yokogawa ; T. Ohji ; Y. Hirata ; F. Miyasaka.** *T. Masutani-Mathematical modelling of circumferential GTA welding of pipes with single V grove- Welding International,* 1999, vol. 13 (5), 360-367
- **M.Li, D.G. Atteridge ; L. L Meekisho.** *S.L. WEST-A 3 D finite element analysis of temperature and stress fields in girth welded 304L stainless steel pipe-Trends in Welding research,* 05 Juin 1995
- **J. Senk.** *A. Martinak-Mathematical simulation of thermal cycles in the heat affected zone in narrow gap welding-Welding International,* 1992, vol. 6 (8), 654-660